# EUROPÄISCHE PATENTSCHRIFT

(11) **EP 0 855 315 B1**
(45) Veröffentlichungstag und Bekanntmachung des Hinweises auf die Patenterteilung: **10.04.2002**
(21) Anmeldenummer: 98100864.2
(22) Anmeldetag: 19.01.1998
(51) Int. Cl.: B60R 21/20

(54) **Airbagvorrichtung**
Air bag device
Dispositf de coussin gonflable

(30) Priorität: 24.01.1997 DE 29701194 U; 05.02.1997 DE 29702008 U
(43) Veröffentlichungstag der Anmeldung: 29.07.1998
(73) Patentinhaber: BREED AUTOMOTIVE TECHNOLOGY, INC., Lakeland, FL 33807-3050 (US)
(72) Erfinder: Specht, Martin, 82340 Feldafing (DE)
(74) Vertreter: Nöth, Heinz, Dipl.-Phys.

(56) Entgegenhaltungen:
- EP-A- 0 694 444
- DE-C- 4 134 673
- DE-U- 29 603 316
- US-A- 5 398 968
- US-A- 5 498 030
- US-A- 5 566 977
- PATENT ABSTRACTS OF JAPAN vol. 096, no. 003, 29.März 1996 & JP 07 291073 A (TOYODA GOSEI CO LTD), 7.November 1995,

## Beschreibung

Die Erfindung betrifft eine Airbagvorrichtung nach dem Oberbegriff des Patentanspruches 1.

Eine derartige aus der DE-U-29603316 bekannte Airbagvorrichtung besitzt ein aufblasbares Gaskissen und eine Füllgaseinrichtung zum Liefern von Füllgas, mit welchem ein Innenraum des Gaskissens gefüllt wird. Im Innenraum des Gaskissens ist eine Gasführungseinrichtung zum Einbringen des Füllgases in das Gaskissen angeordnet. Beim Füllen entfaltet sich das Gaskissen aus einem gefalteten Zustand, in welchem ein gefalteter Kissenteil nach innen zwischen zwei einander gegenüberliegenden Innenwandteilen des Gaskisseninnenraums gestülpt ist.

Aus der EP-A-0 694 444 ist eine Airbagvorrichtung bekannt, welche entlang eines Karosserieteils, insbesondere entlang der Dachbegrenzung (Dachholm) eines Kraftfahrzeugs unter Anpassung des Karosserieverlaufs befestigt werden kann. Das infolge eines Unfalls veranlaßte Füllen des Gaskissens führt zu dessen Entfaltung derart, dass es einen Seitenaufprallschutz für die Fahrzeuginsassen bildet. Aus der DE-U-296 13 781 ist ferner eine Airbagvorrichtung bekannt, welche zur Erzielung eines Seitenaufprallschutzes, insbesondere im Kopfbereich zwischen der A- und C-Säule verspannt werden kann.

Aufgabe der Erfindung ist es, eine Airbagvorrichtung der eingangs genannten Art zu schaffen, die als in einfacher Weise vorgefertigtes Modul für den Einbau im Kraftfahrzeug vorliegt.

Diese Aufgabe wird erfindungsgemäß durch die kennzeichnenden Merkmale des Patentanspruches 1 gelöst.

Durch diese Anordnung läßt sich ein in einfacher Weise vorgefertigtes Einbaumodul, in welchem die Gasführungseinrichtung, insbesondere in Form eines Rohres oder Schlauches, und das Gaskissen kompakt angeordnet sind, erreichen. Gegebenenfalls kann die Anordnung von einer Folie, die in bevorzugter Weise aufgeschrumpft sein kann und beim Entfalten des Gaskissens, beispielsweise an einer Reißnaht, aufgerissen wird, umhüllt sein.

Durch die an der Gasführungseinrichtung angeformten Kanten wird eine definierte Führung des Gaskissengewebes beim Nachinnenstülpen erzielt. Die von insbesondere im wesentlichen parallel zueinander verlaufenden Stegen gebildeten Kanten sind an eine vorzugsweise in Rohrform oder Schlauchform ausgebildete Gasführungseinrichtung angeformt. Im Bereich der Stege können Aufnahmeelemente für Befestigungsmittel, beispielsweise in Form von Hülsen, durch die Befestigungsbolzen gesteckt werden können, vorgesehen sein.

Anhand der Figuren wird an einem Ausführungsbeispiel die Erfindung noch näher erläutert. Es zeigt:
- Fig. 1:: schematisch eine perspektivische Darstellung eines Teils der Airbagvorrichtung, die ein Ausführungsbeispiel der Erfindung ist;
- Fig. 2:: eine Detailansicht des Teiles A in Fig. 1;
- Fig. 3:: eine schnittbildliche Darstellung durch die in Fig. 1 dargestellte Airbagvorrichtung;
- Fig. 4:: eine schnittbildliche Darstellung durch ein weiteres Ausführungsbeispiel;
- Fig. 5:: das Ausführungsbeispiel mit teilweise entfaltetem Gaskissen; und
- Fig. 6:: das Ausführungsbeispiel mit vollständig entfaltetem Gaskissen.

Das dargestellte Ausführungsbeispiel besitzt eine Gasführungseinrichtung 11, welche rohrförmig ausgebildet ist. Die Gasführungseinrichtung 11 ist vollständig von einem Gaskissen 1 umgeben. An die Gasführungseinrichtung 11 ist ein fahnenförmiger Vorsprung 9 angeformt, mit welchem das Gaskissen 1 in einer Naht 10 vernäht ist. Die rohrbzw. schlauchförmige Gasführungseinrichtung 11 besitzt Gasauslaßöffnungen 19, welche in einen Innenraum 7 des Gaskissens 1 gerichtet sind. Der Innenraum 7 wird beim Aufblasen des Gaskissens 1 mit dem Füllgas gefüllt (Fig. 6).

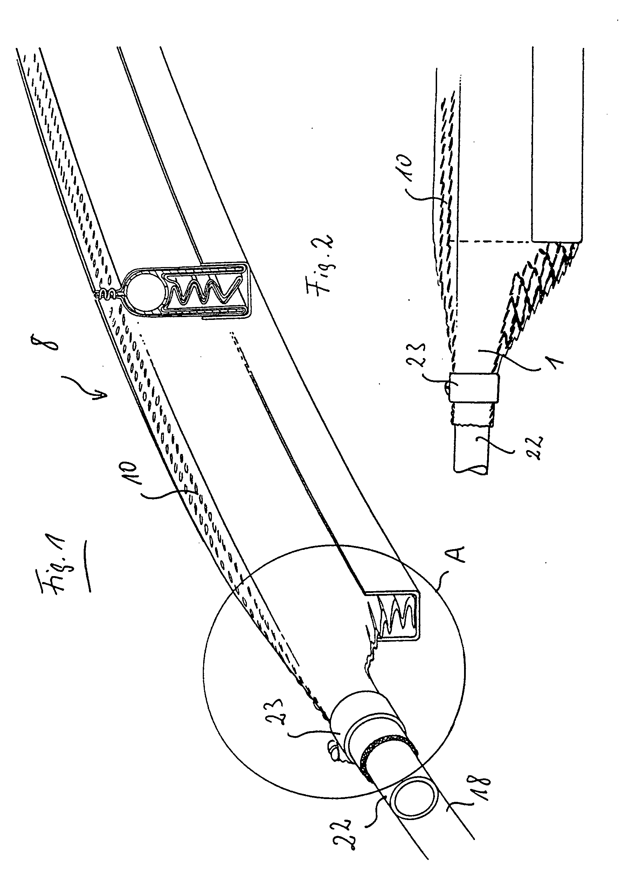

Das Füllgas wird von einer nicht näher dargestellten Gasquelle, z.B. einem Hybridgasgenerator oder pyrotechnischen Gasgenerator, Druckgasquelle oder dergl. über eine Zuleitung 18 (Fig. 1) in die Gasführungseinrichtung 11 geliefert.

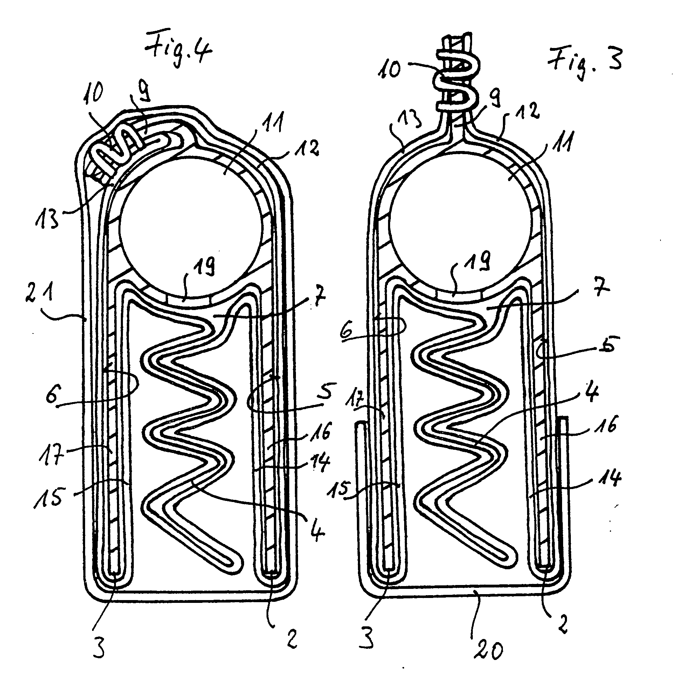

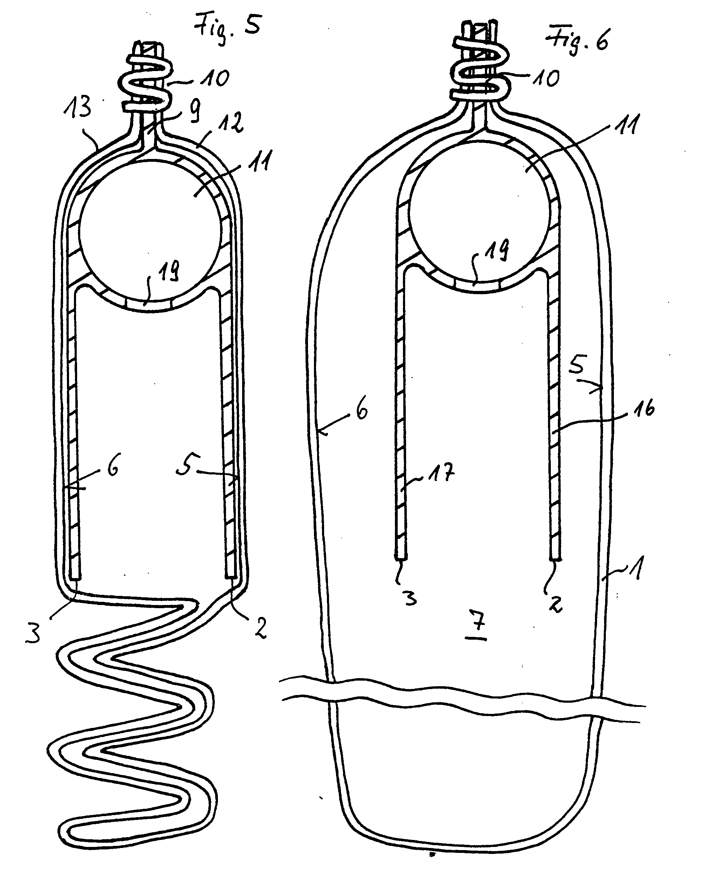

Im Ruhezustand befindet sich ein gefalteter Kissenteil 4 (Fig. 3, 4) innerhalb von Innenwandteilen 5 und 6 des Gaskissens 1. Diese Anordnung wird erreicht durch Umstülpen von Kissenteilen 14, 15 um Kanten 2, 3, die von Stegen 16, 17 gebildet werden, welche an die Gasführungseinrichtung 11 angeformt sind. Von innen nach außen gesehen, befindet sich der gefaltete Kissenteil 4 zwischen den gestülpten Kissenteilen 14, 15 und den Innenwandteilen 5 und 6 des Gaskissens 1. Hierbei sind die Kissenteile 14 und 15 um die Kanten 2 und 3 umgelegt, so daß die in den Fig. 3 und 4 dargestellte Anordnung des gefalteten Kissenteils 4 erreicht wird. Die Stege 16 und 17 sind dabei in der Weise ausgebildet, daß zwischen ihnen ein Aufnahmefach für die gestülpten Kissenteile 14, 15 und den dazwischen liegenden gefalteten Kissenteil 4 gebildet wird.

Die Faltung des gefalteten Kissenteiles 4 ist derart, daß die im entfalteten Zustand (Fig. 6) einander gegenüberliegenden den Innenraum 7 umfassenden Innenwände im wesentlichen großflächig aneinanderliegend in Z-förmigen Falten (Zick-Zack-Form) gefaltet sind. Die Faltung ist in der Fig. 5 vor der Anordnung des gefalteten Teiles 4 innerhalb der beiden Innenwandteile 5 und 6 dargestellt. Auch aus den Fig. 3 und 4 ist die Zick-Zack-Form der Faltung zu ersehen.

Durch die Erfindung wird, wie aus den Fig. 1 bis 4 zu ersehen ist, eine kompakte Anordnung der Gasführungseinrichtung und des gefalteten Kissenteiles 4 erreicht. In bevorzugter Weise bildet diese Anordnung ein langgestrecktes Einbaumodul 8 (Fig. 1), welches in Anpassung an die Innenkontur einer Fahrzeugkarosserie, insbesondere im Dachholmbereich und entlang des Dachholmbereiches im Fahrzeug befestigt werden kann. Hierzu können geeignete Befestigungsmittel vorgesehen sein.

Die rohr- bzw. schlauchförmige Gasführungseinrichtung 11 und die angeformten Stege 16, 17 mit den Befestigungshülsen können aus einem Stück, beispielsweise als Spritzgußteil, gefertigt sein und aus einem hierfür geeigneten Kunststoff bestehen.

Im gefalteten Ruhezustand werden die Gasführungseinrichtung 11 und die zur Bildung der Kanten 2 und 3 angeformten Stege 16, 17 und das aus diesen Komponenten bestehende Profil vollständig vom Gaskissen 1 umfaßt. Hierbei liegen an die Naht 10 sich anschließende Kissenwandteile 12 und 13 an der rohr- bzw. schlauchförmigen und gegebenenfalls flexibel ausgebildeten Gasführungseinrichtung 11 an. Hieran schließen sich die Innenwandteile 5 und 6 an, welche an der Außenseite der Stege 16 und 17 entlang geführt sind. Es folgen dann die um die Kanten 2, 3 gestülpten Kissenteile 14, 15, welche innerhalb der Stege 16 und 17 liegen. In der Mitte der Anordnung befindet sich der gefaltete Kissenteil 4. Nach außen hin kann dieAnordnung von einer Folie 20 teilweise, insbesondere im Bereich der nach unten weisenden Öffnung zwischen den beiden Kanten 2, 3 abgedeckt sein, wie es in Fig. 3 dargestellt ist. Es ist jedoch auch möglich, die Gesamtanordnung durch eine Folie 21 zu umfassen, wie es die Fig. 4 zeigt. Die Folie 20 bzw. 21 kann als Schrumpfschlauch, Vakuumfolie, Klebeband und dergl. ausgebildet sein.

Wie aus der Fig. 1 und der Detaildarstellung in der Fig. 2 hervorgeht, ragt aus dem Ende des in Form eines biegsamen Stabes ausgebildeten Moduls 8 ein Anschlußstutzen 22 der Gasführungseinrichtung 11, der mit der Zuleitung 18, welche von der Füllgasquelle kommt, verbunden ist. Auch der Anschlußstutzen 22 kann vom Gewebe des Gaskissens 1 umfaßt sein, wobei mit Hilfe einer Schelle 23 eine gasdichte Auflage des überstehenden Gewebes des Gaskissens mit der Außenseite des Anschlußstutzens 22 erreicht wird.

## Patentansprüche

1. Airbagvorrichtung mit einem aufblasbaren Gaskissen (1), einer Füllgaseinrichtung zum Liefern von Füllgas, mit welchem ein Innenraum (7) des Gaskissens (1) gefüllt wird, einer im Innenraum (7) des Gaskissens (1) angeordneten Gasführungseinrichtung (11) zum Einbringen des Füllgases in den Innenraum des Gaskissens (1), wobei beim Füllen sich das Gaskissen (1) aus einem gefalteten Ruhezustand entfaltet, in welchem ein gefalteter Kissenteil (4) des Gaskissens nach innen zwischen zwei einander gegenüberliegende Innenwandteile (5, 6) des Gaskisseninnenraumes (7) gestülpt ist, , **dadurch gekennzeichnet, dass** an die Gasführungseinrichtung (11) zwei von Stegen (16, 17) gebildete Kanten (2, 3) angeformt sind, um die der gefaltete Kissenteil (4) gestülpt ist.

2. Airbagvorrichtung nach Anspruch 1, **dadurch gekennzeichnet, dass** der Umfang der insbesondere rohr- oder schlauchförmig ausgebildeten Gasführungseinrichtung (11) vollständig von dem Gaskissengewebe, das mittels einer außerhalb der Gasführungseinrichtung liegenden Naht (10) vernäht ist, umfasst ist.

3. Airbagvorrichtung nach Anspruch 2, **dadurch gekennzeichnet, dass** die Naht (10) mit der Außenseite der Gasführungseinrichtung (11) verbunden ist.

4. Airbagvorrichtung nach Anspruch 2 oder 3, **dadurch gekennzeichnet, dass** im gefalteten Ruhezustand des Gaskissens (1) die sich an die Naht (10) anschließenden Kisseninnenwandteile (12, 13) an der Außenseite der Gasführungseinrichtung (11) anliegen.

5. Airbagvorrichtung nach einem der Ansprüche 1 bis 4, **dadurch gekennzeichnet, dass** die Gasführungseinrichtung (11) und das Gaskissen (1) im gefalteten Zustand als entlang eines Dachholms eines Kraftfahrzeugs befestigbares langgestrecktes Modul (8) ausgebildet ist.

6. Airbagvorrichtung nach einem der Ansprüche 1 bis 5, **dadurch gekennzeichnet, dass** die Naht (10) mit einem an der Außenseite der Gasführungseinrichtung (11) vorgesehenen Vorsprung (9) fest verbunden ist.

7. Airbagvorrichtung nach einem der Ansprüche 1 bis 6, **dadurch gekennzeichnet, dass** der im Ruhezustand gefaltete Kissenteil (4) mit seinen beiden im entfalteten Zustand einander gegenüberliegenden und den Innenraum (7) umfassenden Innenwänden großflächig aneinanderliegend in Z-förmigen Falten gefaltet ist.

8. Airbagvorrichtung nach einem der Ansprüche 1 bis 7, **dadurch gekennzeichnet, dass** der gefaltete Kissenteil (4) zwischen den beiden Stegen (16, 17) angeordnet ist und dass die im wesentlichen parallel verlaufenden Innenwandteile (5, 6) des Gaskisseninnenraums (7) die beiden Stege (16, 17) umfassen.

## Claims

1. Airbag device comprising an inflatable gas cushion (1), an inflation gas device for the supply of inflation gas, with which an interior space (7) of the gas cushion (1) is inflated, a gas supply device (11) arranged in the interior space of the gas cushion (I) for introducing the inflation gas into the interior space of the gas cushion (1), whereby during inflation the gas cushion (1) unfolds from a folding resting state, in which a folded cushion part (4) of the gas cushion is tucked inwards between two interior wall parts (5, 6) of the gas cushion interior space (7) facing each other, **characterised in that** on the gas supply device (11), two edges (2, 3) formed by extending parts (16, 17) are integrally formed, around which the folded cushion part (4) is tucked in.

2. Airbag device according to claim 1, **characterised in that** the circumference of the in particular tube- or hose-shaped gas supply device (11) is completely surrounded by the gas cushion fabric, which is stitched by means of a seam (10) running outside the gas supply device.

3. Airbag device according to claim 2, **characterised in that** the seam (10) is connected to the outer side of the gas supply device (11).

4. Airbag device according to claim 2 or 3, **characterised in that** in the folded resting state of the gas cushion (1), the cushion interior wall parts (12, 13) joining the seam (10) lie against the outer side of the gas supply device (11).

5. Airbag device according to one of claims 1 to 4, **characterised in that** the gas supply device (11) and the gas cushion (1) in the folded state are designed as a long module (8) which can be secured along the roof beam of a motor vehicle.

6. Airbag device according to one of claims 1 to 5, **characterised in that** the seam (10) is securely attached to a projection (9) provided on the outer side of the gas supply device (11).

7. Airbag device according to one of claims 1 to 6, **characterised in that** the cushion part (4), folded in its resting state, is folded in Z-shaped folds with both its interior walls, which face each other in the unfolded state and encompass the interior space (7), lying adjacent to each other over a large surface.

8. Airbag device according to one of claims 1 to 7, **characterised in that** the folded cushion part (4) is arranged between the two extending parts (16, 17) and that the essentially parallel running interior wall parts (5, 6) of the gas cushion interior space (7) encompass the two extending parts (16, 17).

## Revendications

1. Dispositif de coussin d'air comportant un coussin de gaz gonflable (1), un dispositif de gaz de remplissage destiné à l'amenée du gaz de remplissage, servant à remplir un espace intérieur (7) du coussin de gaz (1), un dispositif de guidage du gaz (11) agencé dans l'espace intérieur (7) du coussin de gaz (1) pour introduire le gaz de remplissage dans l'espace intérieur du coussin de gaz (1), le coussin de gaz (1) se déployant lors du remplissage à partir d'un état de repos plié, dans lequel une partie de coussin pliée (4) du coussin de gaz est retournée vers l'intérieur entre deux parties de paroi interne opposées (5, 6) de l'espace intérieur du coussin de gaz (7), **caractérisé en ce que** deux bords (2, 3) formés par deux traverses (16, 17) sont formés sur le dispositif de guidage du gaz (11), la partie de coussin pliée (4) étant retournée autour de ceux-ci.

2. Dispositif de coussin d'air selon la revendication 1, **caractérisé en ce que** la périphérie du dispositif de guidage du gaz, en particulier sous forme d'un tube ou d'un tuyau (11), est complètement entourée par le tissu du coussin de gaz cousu par l'intermédiaire d'une couture (10) agencée à l'extérieur du dispositif de guidage du gaz.

3. Dispositif de coussin d'air selon la revendication 2, **caractérisé en ce que** la couture (10) est reliée au côté externe du dispositif de guidage du gaz (11).

4. Dispositif de coussin d'air selon les revendications 2 ou 3, **caractérisé en ce que** dans l'état de repos plié du coussin de gaz (1), les parties de paroi interne du coussin (12, 13) raccordées à la couture (10) sont adjacentes au côté externe du dispositif de guidage du gaz (11).

5. Dispositif de coussin d'air selon l'une des revendications 1 à 4, **caractérisé en ce que** le dispositif de guidage du gaz (11) et le coussin de gaz ont à l'état plié la forme d'un module à extension longitudinale (8) fixé le long d'un longeron du toit d'un véhicule automobile.

6. Dispositif de coussin d'air selon l'une des revendications 1 à 5, **caractérisé en ce que** la couture (10) est reliée fermement à une saillie (9) agencée sur le côté externe du dispositif de guidage du gaz (11).

7. Dispositif de coussin d'air selon l'une des revendications 1 à 6, **caractérisé en ce que** dans l'état de repos, la partie de coussin (4) pliée est pliée avec ses parois internes opposées à l'état déployé et entourant l'espace intérieur (7), de manière adjacente et à recouvrement en des plis en forme de Z.

8. Dispositif de coussin d'air selon l'une des revendications 1 à 7, **caractérisé en ce que** la partie de coussin pliée (4) est agencée entre les deux traverses (16, 17) et **en ce que** les parties de paroi interne essentiellement parallèles (5, 6) de l'espace intérieur du coussin de gaz (7) entourent les deux traverses (16, 17).
